# EUROPEAN PATENT APPLICATION

(11) **EP 2 165 741 A1**
(43) Date of publication of application: **24.03.2010**
(21) Application number: 08164532.7
(22) Date of filing: 17.09.2008
(51) Int. Cl.: A63B 49/08, A63B 59/00

(54) **Vibration dampening grip for the handle of an implement**

(71) Applicant: Prince Sports, Inc., Bordentown NJ 08505 (US); Technogel Italia S.R.L., 36050 Pozzoleone (VI) (IT)
(72) Inventor: Mason, Matteo, I-35010, Limena (PD) (IT); Pinaffo, Mauro, 35012, Camposampiero (PD) (IT); Gazzara, Roberto, 30171, Mestre (VE) (IT)
(74) Representative: Zanoli, Enrico

(57) **Abstract**

A grip for the handle of an implement, particularly a tennis racket, comprises preferably a polyurethane gel characterized by a set of properties ensuring vibration dampening and optimal comfort. The grip comprises a band of self-adhesive polyurethane gel with a Durometer Hardness (ASTM D 2240-02) of from 5 Shore 000 to 40 Shore A, preferably coated with a film or fabric on the side in contact with the user. The band is helically wound on the handle with the uncoated self-adhesive bottom surface adhering to the handle. The gel material distributes the pressure and facilitates firm hold.

## Description

The present invention relates to vibration dampening grip for the handle of an implement, particularly for tennis rackets.

Several types of grips for tennis racket handles are known.

One type of known grip used by medium/high level players consists of a band of calf skin wound on the handle of the tennis racket. Such grip provides low hand comfort when held but allows the player to feel the edges of the racket handle, which helps to feel the space orientation of the racket . Also, all the vibrations transmitted by the racket frame to the racket handle are felt.

Another known type of grip comprises an upper or outer layer of polyurethane providing sufficient adhesion when gripped by the hand, an intermediate layer consisting of a polyester/polyamide nonwoven or foam providing good hand comfort and vibration dampening, and a bottom layer consisting of a tape that is adhesive on both sides to fasten the grip to the handle. The thickness of the upper layer is of about 0.4 mm and the thickness of the intermediate layer is of about 1.5 mm.

Still another known type of grip has substantially the same structure as described above, but the intermediate layer is of increased thickness to provide more comfort, vibration dampening and shock absorbing.

Such known grips, however, have suffered several disadvantages.

First, loss of elastic behavior of the material used to make the grip occurs, causing the grip not to regain its original shape and thickness after compression, which in turn causes loss of comfort. A way to provide more comfort is to increase the thickness of the intermediate layer consisting of a polyester/polyamide nonwoven or foam. This, however, increases the overall size of the handle, which may not be desirable.

Also, the layer consisting of a polyester/polyamide nonwoven or foam tends to undergo a deformation only along the direction of application of the load, which causes a substantial increase of pressure in those parts of the grip at direct contact with the hand. After prolonged use this causes soreness or pain in the fingers of the player due to difficult blood circulation. Unnatural hold of the handle to get round such difficulty can cause formation of corn and eventually tennis elbow.

Moreover, the material of the intermediate layer becomes hard and brittle upon aging, and tends to break. Still another disadvantage is the difficulty to mount the grip on the racket handle, which depends on the hardness of the material used to make the intermediate layer.

U.S. Pat. Nos. 4,015,851 discloses a rubber grip for tennis racket handles having a double lamination of two rubber materials, the bottom layer being relatively harder than the upper or outer layer, which is soft and tacky to provide good adhesion when gripped by the hand. Use of an outer rubber coating, however, increases both the weight and the cost of the grip.

EP 1435256 discloses a cover tape suitable to be wound around the handle of an object, e.g. a tennis racket, to form a grip which is elastic and shock absorbing. The discloses tape has an inner surface bonded to an elastic layer made of a silicon gel endowed with high elasticity. A too high elasticity, however, is not desirable for its dampening ability is poor.

Italian Utility Model Application No. MI1995U000275 filed on 18 April 1995 discloses a tape to coat handles of sports articles and the like. The tape is preferably made with polyurethane or PVC or leather. One side of such tape is provided with a cavity housing a viscoelastic material, for example a gel-type material. No particular gel material is disclosed.

There thus exists a need for a grip for the handle of an implement, particularly a tennis racket handle, that provides good comfort and vibration dampening without substantially increasing the size and the cost of the handle.

It would be desirable if a material could be provided for a grip for an implement handle, particularly for tennis racket handles, which would enhance the blood circulation by a balanced distribution of load and pressure in the hand of the user without significantly resulting in unnatural hold of the handle, weariness and occurrence of shock-related traumas, in particular tennis elbow.

Therefore the present invention relates to a grip for the handle of an implement comprising a self-adhesive polymeric gel characterized by a Durometer Hardness measured according to ASTM D 2240-02 of from 5 Shore 000 to 40 Shore A; said gel having reversible adhesive properties. The durometer was operated manually according to the procedure described at paragraph 9.2 of ASTM 2240-02.

The invention relates particularly to a grip as defined above, wherein said polymeric gel is a polyurethane gel.

More particularly the invention relates to a grip for an athletic equipment, preferably a tennis racket.

Self-adhesive polyurethane gels of the general type used in the grip according to the invention are disclosed in U.S. Pat. No. 6,191,216 B1.

The term "reversible adhesive" in the present description designates the property of a self-adhesive material to bond to the surface of an object by application of a compression force and to be detached from said surface by application of a pulling force, without leaving any significant residue of material to said surface after detachment.

According to a preferred aspect, the grip of the present invention comprises a polyurethane gel characterized by a Durometer Hardness measured according to ASTM D 2240-02 of from 40 Shore 000 to 30 Shore A, more preferably of from 0 Shore A to 25 Shore A.

Also, the grip of the present invention comprises a polyurethane gel characterized by certain values of elastic hysteresis.

Elastic hysteresis is a property of some materials (e.g. rubber), where the strain due to a given stress is larger when the stress is decreasing than when it is increasing. A graph of stress versus strain, while stress is gradually applied then removed, produces a loop with the area proportional to the energy dissipated in the material. A large loop area means the substance makes a good shock absorber. Accordingly, a gel exhibiting a low hysteresis percentage would be expected to be highly, in other words, have a rapid and significantly complete return to its original shape. A gel exhibiting high hysteresis percentage would be expected to be less elastic, in other words have a more delayed and less complete return to its original shape.

It has been found that suitable polyurethane gels for grips according to the invention are those exhibiting a hysteresis of from 25 to 70% when measured according to DIN ISO 3386-1, preferably from 30 to 65%, more preferably from 45 to 63%.

The invention relates also to an athletic equipment comprising a handle equipped with a grip as defined above, particularly a tennis racket.

According to another aspect of the invention, the grip for a handle according to the invention, particularly for tennis racket handles, is obtained by a method comprising helically winding on the handle a band of polyurethane gel having the properties defined above, **characterized in that** said band has a cross section with curved or slanting sides, the upper surface being coated with a film layer and the bottom surface being of a width narrower than said upper surface, said helical winding of said band on said handle being carried out by partially overlapping the longitudinal edges of said band, whereby a grip of substantially uniform thickness is obtained.

It has been found that a grip for tennis racket handles comprising a polyurethane gel having the properties above performs very well with respect to both vibration dampening and comfort for the player. Upon application of a load the grip according to the invention undergoes a deformation along all three axes X, Y, Z, not only along the axis of application of the load, thereby adapting to the form of the hand of the player. When the application of the load is discontinued, the grip regains its original shape without showing any significant permanent plastic deformation. This ensures that the pressure exerted on the hand is balanced, which helps to improve blood circulation. Also, the grip allows the handle to be held correctly, so that unnatural hold postures are avoided. This helps to reduce weariness of the hand-wrist-forearm system, and risk of onset of the tennis elbow symptoms.

A suitable polyurethane gel having the properties according to the invention is commercialized by Technogel Italia s.r.1. under the trademark *Technogel*®*.* The properties of such polyurethane gel can be adjusted within the claimed ranges to optimize the grip depending on the need of the users.

With respect to vibration dampening, it is possible to vary the response diagram amplitude vs. frequency of vibration, which controls which frequency is dampened or amplified. This allows to properly feel the racket by allowing the main vibration frequency of the racket frame to pass through the handle and the grip to the hand of the player, and by dampening the higher frequencies that would be bothersome and tiresome.

The grip comprising the polyurethane gel according to the invention is formulated without plasticizers or volatile substances. This avoids bleeding or migration of light components to the surface of the grip. The product is thus stable upon aging.

With respect to comfort, the desired degree of comfort can be achieved by varying the hardness of the gel without varying the thickness of the grip, so that the total thickness of the handle is kept constant.

Soft/medium/hard bands of polyurethane gel useable to build a grip according to the present invention have preferably the set of properties listed in the following Table 1.

**Table 1**

| PROPERTY | SOFT | MEDIUM | HARD |
|---|---|---|---|
| Tensile strength | 140 - 200 | 200 - 300 | 300 - 400 |
| Elongation at break | 900 - 700 | 700 - 400 | 400 - 250 |
| Shore A Durometer Hardness | 0 - 5 | 5-10 | 10-20 |
| Density | 1006 | 1006 | 1006 |

| | | | |
|---|---|---|---|
| Note: properties were measured with test method and conditions described above. | | | |

Laboratory tests were carried out at a prominent university to evaluate the vibrations dampening ability of bands made of various materials suitable to form grips to be mounted on tennis racket handles. Such bands included also two bands of polyurethane gel commercialized by Technogel Italia s.r.1. under the trademark *Technogel*® having the properties listed in Table 2:

**Table 2**

| PROPERTY | BAND 1 | BAND 2 | Nat. Rubber | Silicone rubber |
|---|---|---|---|---|
| Shore A Durometer Hardness | 5 | 20 | 70 | 35 |
| Density | 1006 | 1006 | 1040 | 1250 |

| | | | | |
|---|---|---|---|---|
| Note: properties were measured with test method and conditions described above. | | | | |

More specifically, purpose of the tests was to evaluate the frequency of vibration and the maximum resonance amplitude of each sample. Performance of such bands was compared to that of a sample of natural rubber and that of a silicone grade.

In the testing, specimens consisting of stripes of various materials suitable to form grips were glued to a the plate of a vibration shaker Brüel & Kiaer (110 N). An element of known mass was glued to the upper face of the specimen to build a system excited from the base. A first accelerometer was mounted on the plate of the shaker and a second accelerometer was mounted on the element of known mass. A control and data acquisition system was used, associated to a computer with a software to process the data. The shaker was set to vibrate at a fixed acceleration of 1 m/s² according to a stationary sinusoidal mode.

The results of the tests are reported in Table 3 below.

**Table 3**

| PROPERTY | BAND 1 | BAND 2 | Natural Rubber | Silicone |
|---|---|---|---|---|
| Resonance frequency (Hz) | 165 | 185 | 1,500 | 215 |
| Max. resonance amplitude | 2.7 | 3.7 | 3.5 | 9.1 |

The bands of the material used to build grips according to the invention had resonance frequency of 165-185 Hz, which means that the two samples did not show significant differences with respect to hardness. Their dampening ability was very good, with a maximum amplitude of 2.7 - 3.7. Natural rubber showed a higher rigidity compared with the other samples, but dampening ability was good. Silicone rubber showed a rigidity slightly higher than that of Band 1 and Band 2, but its dampening ability was poor, having a maximum amplitude of 9.1.

It was concluded that the material of Band 1 and Band 2 shows an excellent balance of properties for use as grip for tennis racket handles.

In view of the above tests a preferred practice of the invention involves a band made of a polyurethane gel having the set of properties as defined in claim 1, comprising an upper surface and a lower surface, the upper surface being coated with a flexible film or fabric suitable to be in contact with the hand of a player.

Some embodiments of the invention will now be described by way of example with reference to the attached drawings, wherein:
FIG. 1 is a perspective view of a band according to a first embodiment of this invention;
FIG. 2 is a front elevational view of the band shown in FIG. 1;
FIG. 3 is a top view of a band according to a second embodiment of this invention;
FIG. 4 is a cross-sectional view along the line A-A of the band shown in FIG. 3;
FIG. 5 is a top view of a band according to a third embodiment of invention;
FIG. 6 is a cross-sectional view along the line A-A of the band shown in FIG. 5, and
FIG. 7 is a cross-sectional view of a fourth embodiment of this invention.

The present invention is directed to a grip or cover for the handle of an athletic equipment. The grip is made of a vibration dampening or vibration absorbing material which includes a polyurethane gel having the set of properties defined above. Examples of such polyurethane gels are disclosed in U.S. Pat. No. 6,191,216 B1. All of the details of such patent are fully incorporated herein not only with regard to the materials, but also with regard to how the material may be applied, as well as other disclosures in those patents.

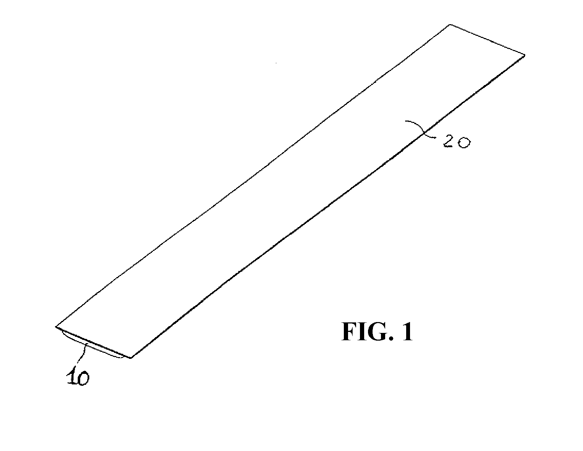

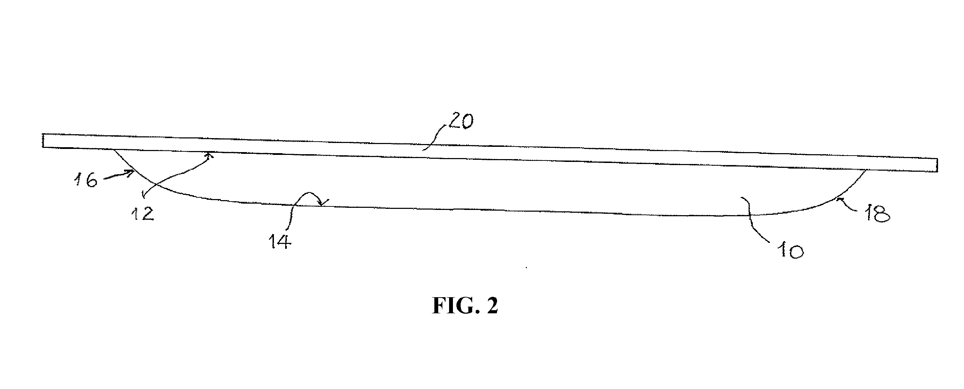

FIGS. 1-2 illustrate one practice of this invention. As shown therein a band 10 of polyurethane gel as described above, namely with the appropriate hardness and vibration dampening characteristics and of a size suitable to be used to form of a grip, comprises an upper surface 12 and a lower surface 14. The upper surface 12 is being coated with a flexible film or fabric 20, suitable to be in contact with the hand of a player. The width of the film or fabric 20 is larger than the width of the upper surface of the band of polyurethane gel, so that the longitudinal edges of the film or fabric 20 are not associated to the gel material. Also, the lower surface 14 of the band 10 of polyurethane gel is narrower than the upper surface 12, so that curved or slanted flanks 16, 18 are defined. Moreover, the lower surface of the band 10 of polyurethane gel is uncoated to retain its self-adhesive nature.

To build a grip for a handle, band 10 is wound on the handle with the lower surface 14 in contact with the handle. The material would be tacky enough for it to adhere with the lower surface 14 to the handle of the racket. Preferably the band is wound according to an helical path, so that the longitudinal edges of the band are superimposed and partially overlap. The slanted sides have a reduced thickness and are thus such that no excess material is deposited in the overlapping portion, so that a grip of substantially uniform thickness is eventually built. The flexible film or fabric 20 coating the upper surface 12 is selected among any material suitable to be in contact with the hand of a player. It must be strong enough to withstand breaking or tearing upon use and provide good comfort. Also, it must be flexible to allow the gel band undergo a full deformation and adapt to the form of the hand of the player. Moreover, the film or fabric 40 must be flexible since when the application of the load is discontinued, the grip must regain its original shape without showing any significant permanent deformation. An example of a material suitable for the film 20 is polyurethane.

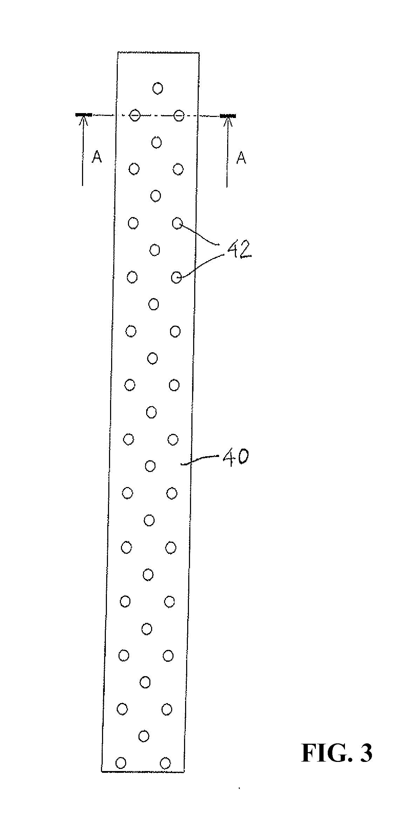

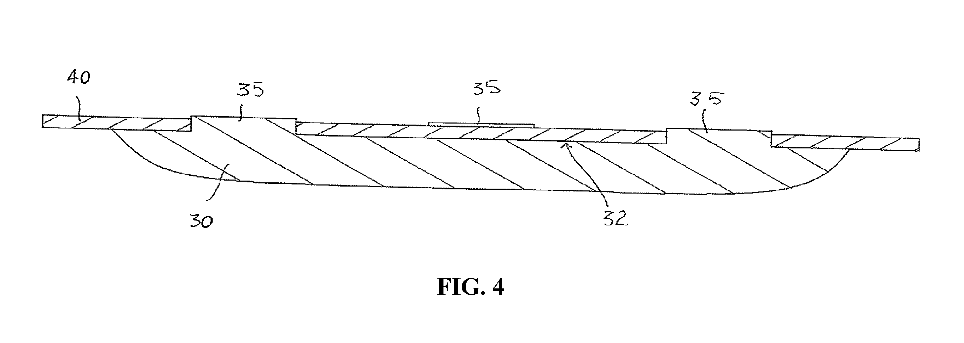

FIGS. 3 and 4 schematically show a second embodiment of the band suitable to be used to form of a grip according to the invention. In this embodiment, a band 30 of polyurethane gel as described above comprises an upper surface 32 coated with a flexible film or fabric 40 provided with a plurality of circular holes 42. The underlying gel material projects through holes 42 upon application of a pressure, either during winding of the band on a handle, or during use of the handle, or both. FIG. 4 shows the projecting material 35 exposed on the surface of the film 40. Such projecting material will be compressed and shaped by the hand of a player when the grip is held.

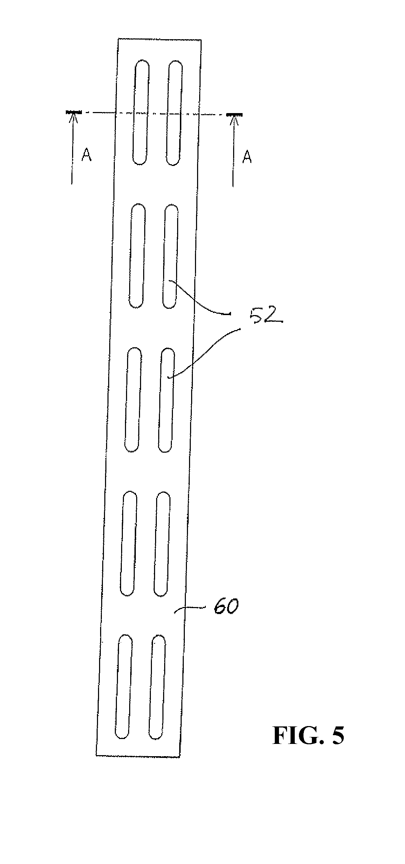

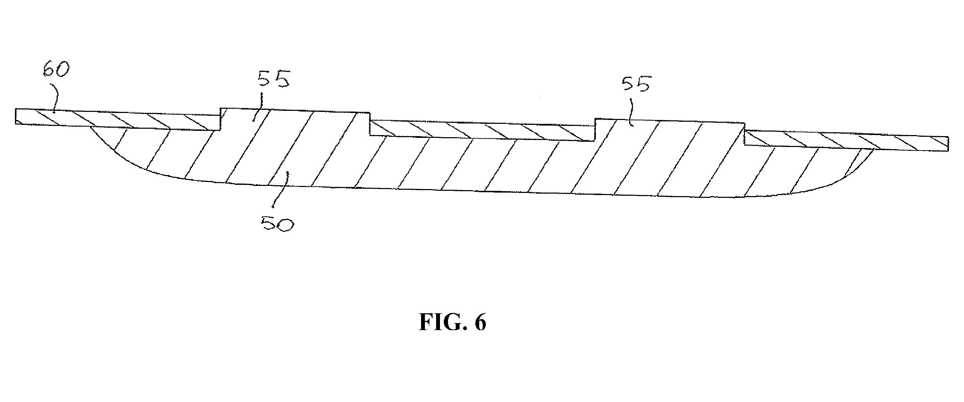

FIGS. 5 and 6 show a variation of the embodiment of FIGS. 3-4 where a film or fabric 60 is provided with a plurality of elongated holes 52. The gel material projects through holes 20 from the underlying band 50 to form projections 55 suitable to be shaped by the hand of a player when the grip is held, as described above.

By properly selecting the number, size and shape of the holes on the coating film it is possible to control the amount of gel material projecting from the outer surface of the grip, which will be in direct contact with the hand of the user.

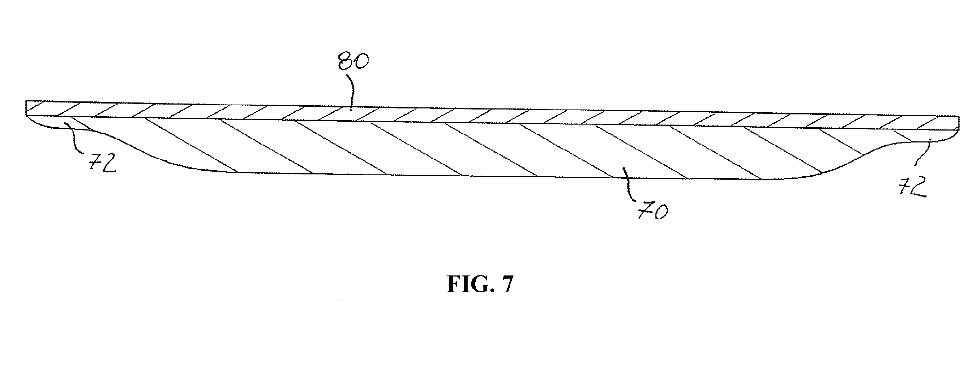

FIG. 7 shows a fourth embodiment of a band suitable to make a grip according to the invention. In such embodiment a band 70 of polyurethane gel as described above comprises an upper surface coated with a flexible film or fabric 80 having the same width of the upper surface of the polyurethane gel band. However, the longitudinal edges 72 of band 70 have a reduced thickness, so that a substantially uniform grip is obtained by overlapping the longitudinal edges during winding the band on a handle.

Also, the band of polyurethane gel for use in a grip according to the invention can be made with portions having different thickness. The selection of the most suitable shape depends on the application, namely the type of grip, also in view of ergonomic factors.

The vibration dampening grip of this invention could be used for a wide number of implements. Examples of such implements include athletic equipment, hand tools and handlebars. For example, such athletic equipment includes racquets, bats, sticks, javelins, etc. Examples of tools include hammers, screwdrivers, shovels, rakes, wrenches, pliers, knives, air hammers, etc. Examples of handlebars include motorcycles, bicycles and various types of steering wheels.

In accordance with the various uses the polyurethane gel band may have different degrees of hardness, coefficient of friction and dampening of vibration. Similarly, the thicknesses of the band could also vary in accordance with the intended use.

The grip of this invention could be used with various implements as discussed above. Thus, the handle portion of the implement could be of the octagonal shape like a tennis racquet handle, or of cylindrical shape with a uniform diameter and smooth outer surface such as a golf club handle. Alternatively, the handle could taper such as a bat handle. Other geometric shapes include a generally oval type handle such as that of a hammer, but the invention is not limited to any particular geometric shape and could have any irregular shape.

Other variations and uses will be readily apparent to those of ordinary skill in the art in view of the above teachings, examples and suggestions.

## Claims

1. Grip for the handle of an implement **characterized by** comprising a self-adhesive polymeric gel having a Durometer Hardness measured according to ASTM D 2240-02 of from 5 Shore 000 to 40 Shore A, said gel having reversible adhesive properties.

2. Grip according to claim 1, **characterized in that** said polymeric gel is a polyurethane gel.

3. Grip according to claim 2, **characterized in that** said polyurethane gel has a Durometer Hardness of 40 Shore 000 to 30 Shore A.

4. Grip according to claim 2, **characterized in that** said polyurethane gel has a Durometer Hardness of from 0 Shore A to 25 Shore A.

5. Grip according to claim 2, **characterized in that** said polyurethane gel has an elastic hysteresis of from 25 to 70% when measured according to DIN ISO 3386-1.

6. Grip according to claim 2, **characterized in that** said polyurethane gel has an elastic hysteresis of from 30 to 65%.

7. Grip according to claim 2, **characterized in that** said polyurethane gel has an elastic hysteresis of from 45 to 63%.

8. Grip according to claim 2, **characterized in that** said implement is a tennis racket.

9. Grip according to claim 2, **characterized by** comprising a band wound on said handle, said polyurethane gel being included in said band.

10. Grip according to claim 9, **characterized in that** said band (10;30;50;70) comprises an upper surface and a bottom surface, said upper surface being coated with a film or a fabric (20;40;60).

11. Grip according to claim 9, **characterized in that** said band comprises curved or slanting sides.

12. Grip according to claim 9, **characterized in that** said band is wound by partially overlapping the longitudinal edges thereof, whereby the thickness of said grip is substantially uniform over the length of said handle.

13. Grip according to claim 10, **characterized in that** said film or a fabric (20; 40; 60) is provided with a plurality of holes (42; 52).

14. Implement comprising a handle **characterized by** comprising a grip according to any of the preceding claims.
